(19)

Europäisches Patentamt
European Patent Office
Office européen des brevets

(11) **EP 2 312 189 A1**

(12) **EUROPEAN PATENT APPLICATION**
published in accordance with Art. 153(4) EPC

(43) Date of publication:
**20.04.2011 Bulletin 2011/16**

(51) Int Cl.:
***F16L 19/08*** (2006.01)

(21) Application number: **09806665.7**

(22) Date of filing: **05.08.2009**

(86) International application number:
**PCT/JP2009/063863**

(87) International publication number:
**WO 2010/018772 (18.02.2010 Gazette 2010/07)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **12.08.2008 JP 2008208010**

(71) Applicant: **Daikin Industries, Ltd.**
**Osaka 530-8323 (JP)**

(72) Inventors:
• **NAKATA, Haruo**
**Sakai-shi**
**Osaka 591-8511 (JP)**
• **SHIMAMURA, Takashi**
**Sakai-shi**
**Osaka 591-8511 (JP)**

(74) Representative: **HOFFMANN EITLE**
**Patent- und Rechtsanwälte**
**Arabellastraße 4**
**81925 München (DE)**

(54) **BITE-TYPE PIPE CONNECTION STRUCTURES AND VALVES, BITE-TYPE PIPE JOINTS AND FREEZERS**

(57) A joint main body 1 of a bite-type pipe connection structure includes an internal thread cylinder 13 extending from a base portion 11 and a hollow projection 14 that extends from the base portion 11 and is located inside of the internal thread cylinder 13. A cam surface 19, which is able to contact a tapered surface 33 of a ferrule 3, is formed at the distal end of the projection 14. A gap 15 is defined between the internal thread cylinder 13 and the projection 14. The joint main body 1 is configured to satisfy the following two expressions:

$$S1/S2 \geq 0.5 \ldots (1)$$

$$S1/D1 \geq 0.5 \ldots (2)$$

(where S1 indicates the dimension of the gap 15 along the central axis of the joint main body 1, S2 indicates the dimension between the ends of the cam surface 19 along the central axis of the joint main body 1, and D1 indicates the maximum thickness of the projection 14).

**Fig. 3(a)**

EP 2 312 189 A1

# Fig. 3(b)

# Fig. 3(c)

## Description

TECHNICAL FIELD

The present invention relates to a bite-type pipe connection structure, and particularly, to a structure of a joint main body used in a bite-type pipe connection structure in which a cam surface is formed in the joint main body. Also, the present invention relates to a valve, a bite-type pipe joint, and a refrigeration apparatus that use such a bite-type pipe connection structure.

BACKGROUND ART

Bite-type pipe joints are used in piping systems such as refrigerant piping for refrigeration apparatuses and hot and cold water piping for water heating devices to connect pipes to a connection object such as an apparatus, a container, and a pipe. A typical bite-type pipe joint includes a joint main body attached to a connection object, a coupling member that is fastened to the joint main body while being fitted about a pipe, and a ferrule located between the joint main body and the coupling member.

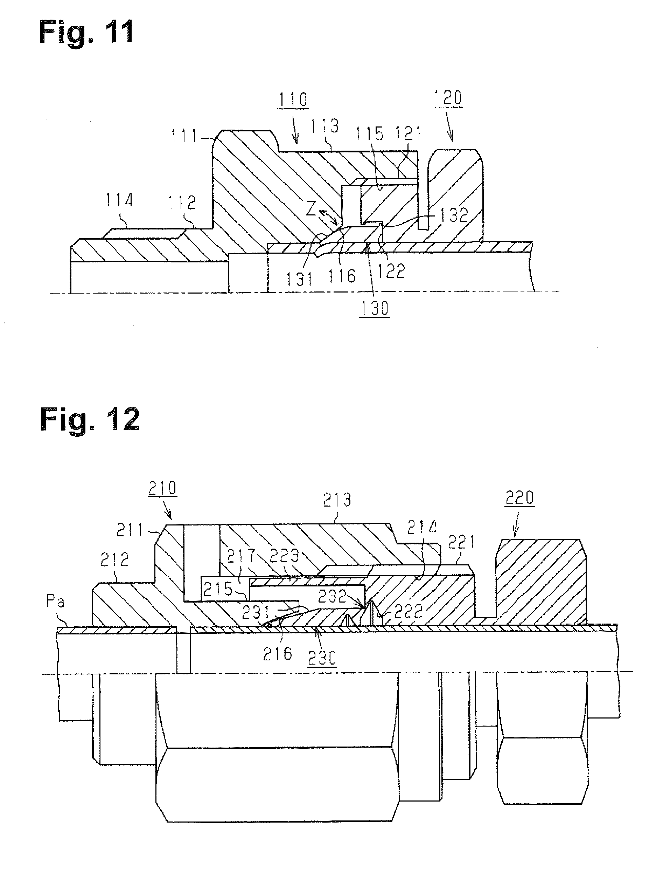

Fig. 11 shows a conventional bite-type pipe joint of this type. A joint main body 110 of the pipe joint shown in Fig. 11 has a base portion 111, a socket portion 112, and an internal thread cylinder 113. The socket portion 112 is provided at one end of the base portion 111. An external thread 114, which can be threaded to an internal thread of the connection object, is formed on the outer surface of the socket portion 112. The internal thread cylinder 113 is located at an end of the base portion 111 opposite to the end at which the socket portion 112 is located. An internal thread 115 is formed on the inner surface of the internal thread cylinder 113. The base portion 111 has a cam surface 116 that contacts a tapered surface 131 of the ferrule 130.

An external thread 121, which can be threaded to the internal thread 115 of the joint main body 110, is formed on the outer surface of the coupling member 120, which is fastened to the joint main body 110. The ferrule 130 is formed integrally with the coupling member 120 with a thin portion 132 in between. In the fastening process of the coupling member 120 to the joint main body 110, the thin portion 132 is broken so that the ferrule 130 is separated from the coupling member 120. The coupling member 120 has a pressing surface 122 located rearward of and away from the ferrule 130. Fig. 11 illustrates a state in which the ferrule 130 is pressed by the pressing surface 122 after the thin portion 132 is broken, and the ferrule 130 is separated from the coupling member 120.

Fig. 12 shows another example of a conventional bite-type pipe joint of the same type. A joint main body 210 of the pipe joint shown in Fig. 12 has a base portion 211, a socket portion 212, and an internal thread cylinder 213. The socket portion 212 is provided at one end of the base portion 211. The socket portion 212 is brazed to a pipe Pa. The internal thread cylinder 213 is located at an end of the base portion 211 opposite to the end at which the socket portion 212 is located. An internal thread 214 is formed on the inner surface of the internal thread cylinder 213. The joint main body further includes a hollow projection 215 that extends from the base portion 211 and is located inside the internal thread cylinder 213. A cam surface 216, which contacts a tapered surface 231 of the ferrule 230, is formed at the distal end of the projection 215. A gap 217 is defined between the internal thread cylinder 213 and the projection 215.

An external thread 221, which can be threaded to the internal thread 214 of the joint main body 210, is formed on the outer surface of the coupling member 220, which is fastened to the joint main body 210. The ferrule 230 is formed integrally with the coupling member 220 with a thin portion 232 in between. The coupling member 220 has a pressing surface 222 located rearward of and away from the ferrule 230. The coupling member 220 also includes a protective cylinder 223 that surrounds and protects the ferrule 230. The protective cylinder 223 and the coupling member 220 are formed integrally. The gap 217 of the joint main body 210 serves to accommodate the protective cylinder 223 when the coupling member 220 is fastened to the joint main body 210. Fig. 12 illustrates a state before the thin portion 232 is broken and the ferrule 230 is separated from the coupling member 220.

Both conventional examples shown in Figs. 11 and 12 are disclosed in Patent Document 1.

As a result of research related to the mechanism of sealing between the cam surface of a joint main body and the tapered surface of the ferrule, the present inventors have reached the conclusion that the conventional example shown in Fig. 11 has the following drawbacks. In the conventional example of Fig. 11, the cam surface 116 is directly formed on the base portion 111 of the joint main body 110. Since the base portion 111 has a high rigidity, the cam surface 116 seldom flexes in the direction of arrow Z in Fig. 11 or is seldom deformed to conform to the tapered surface 131 of the ferrule 130. This reduces the contact area between the cam surface 116 of the joint main body 110 and the tapered surface 131 of the ferrule 130. Thus, when a pipe is connected to a connection object, fluid flowing through the pipe is likely to leak at the connected portion.

The conventional example shown in Fig. 12 has the same drawbacks as the example of Fig. 11 when the rigidity of the projection 215 on the cam surface 216 is high.

PRIOR ART DOCUMENTS

Patent Documents

Patent Document 1: Japanese Laid-Open Patent Publication No. 2008-106935

## SUMMARY OF THE INVENTION

Problems that the Invention is to Solve

Accordingly, it is an objective of the present invention to improve the structure of the cam surface of a joint main body that contacts the tapered surface of a ferrule, thereby providing a bite-type pipe connection structure that is capable of connecting a pipe to a connection object with a high fluid-tightness. Another objective of the present invention is to provide a valve, a bite-type pipe joint, and a refrigeration apparatus that use the bite-type pipe connection structure.

Means for Solving the Problems

To achieve the foregoing objective and in accordance with one aspect of the present invention, a bite-type pipe connection structure for connecting a pipe to a connection object is provided. The bite-type pipe connection structure includes a joint main body attached to the connection object, a coupling member fastened to the joint main body, and a ferrule arranged between the joint main body and the coupling member. The joint main body includes a base portion, an internal thread cylinder that has an internal thread formed on the inner surface and extends from the base portion, and a hollow projection that projects from the base portion and is located inside of the internal thread cylinder. A space inside the projection forms a pipe receiving hole that allows for insertion of the pipe. A cam surface is formed at the distal portion of the projection. The cam surface can contact a tapered surface of the ferrule. A gap is defined between the internal thread cylinder and the projection. The joint main body is configured to satisfy the following expressions 1 and 2:

$$S1/S2 \geq 0.5 \ldots (1)$$

$$S1/D1 \geq 0.5 \ldots (2)$$

(where S1 indicates the dimension of the gap along the central axis of the joint main body, S2 indicates the dimension between the ends of the cam surface along the central axis of the joint main body, and D1 indicates the maximum thickness of the projection).

In accordance with another aspect of the present invention, a valve and a bite-type pipe joint are provided that include a pipe joint portion in which the above described bite-type pipe connection structure is used.

In accordance with a further aspect of the present invention, a refrigeration apparatus that includes the above described valve or bite-type pipe joint is provided.

## BRIEF DESCRIPTION OF THE DRAWINGS

Fig. 1 is a half cross-sectional view of a bite-type pipe connection structure according to one embodiment of the present invention, illustrating a state in which a coupling member is fastened to a joint main body;

Fig. 2 is a cross-sectional view of the ferrule of the bite-type pipe connection structure of Fig. 1, showing a state in which the ferrule is temporarily fixed;

Fig. 3(a) is a side view of the joint main body of the bite-type pipe connection structure shown in Fig. 1;

Fig. 3(b) is a cross-sectional view taken along line A-A of Fig. 3(a);

Fig. 3(c) is an enlarged view illustrating part of Fig. 3(b);

Fig. 4(a) is a side view of the coupling member of the bite-type pipe connection structure shown in Fig. 1;

Fig. 4(b) is a cross-sectional view taken along line B-B of Fig. 4(a);

Fig. 4(c) is an enlarged view illustrating part of Fig. 4(b);

Fig. 5(a) is a side view of the ferrule of the bite-type pipe connection structure shown in Fig. 1;

Fig. 5(b) is a cross-sectional view taken along line C-C of Fig. 5(a);

Fig. 6 is a half cross-sectional view of the bite-type pipe connection structure of Fig. 1, illustrating a state in which fastening of the coupling member to the joint main body is complete;

Fig. 7 is a perspective view showing a specialized tool for the bite-type pipe connection structure shown in Fig. 1;

Fig. 8 is a graph showing the relationship between the value S1/S2 and the amount of leakage;

Fig. 9 is a graph showing the relationship between the value S1/D2 and the amount of leakage;

Fig. 10 is a graph showing the relationship between the value S1/D2 and the machining speed ratio;

Fig. 11 is a cross-sectional view of a conventional bite-type pipe connection structure, illustrating a state in which the coupling member is fastened to the joint main body; and

Fig. 12 is a half cross-sectional view of another conventional bite-type pipe connection structure, illustrating a state in which the coupling member is fastened to a joint main body.

MODE FOR CARRYING OUT THE INVENTION

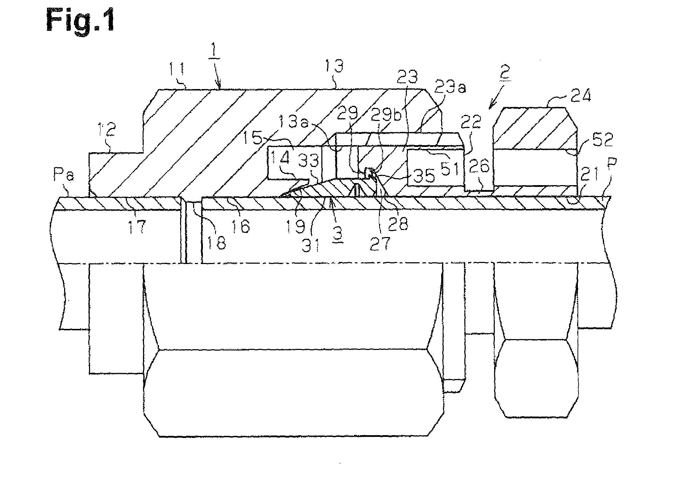

A bite-type pipe connection structure according to a first embodiment of the present invention will now be described with reference to Figs. 1 to 10.

In the field of refrigeration apparatuses such as air conditioners, the bite-type pipe connection structure according to the present embodiment is employed in a pipe joint portion of a bite-type pipe joint in a refrigerant circuit. The pipe connection structure of the present embodiment is also employed in a pipe joint portion of a stop valve that connects pipes for connecting outdoor and indoor units of a separate type air conditioner.

As shown in Figs. 1 to 5(b), the bite-type pipe connection structure according to the present embodiment includes a joint main body 1, a coupling member 2, and a ferrule 3. The bite-type pipe connection structure is used for connecting a first pipe P to a second pipe Pa, which is a connection object. The joint main body 1 is attached to the second pipe Pa. The coupling member 2 is fastened to the joint main body 1. The ferrule 3 is formed independently from the joint main body 1 and the coupling member 2, and is located between the joint main body 1 and the coupling member 2.

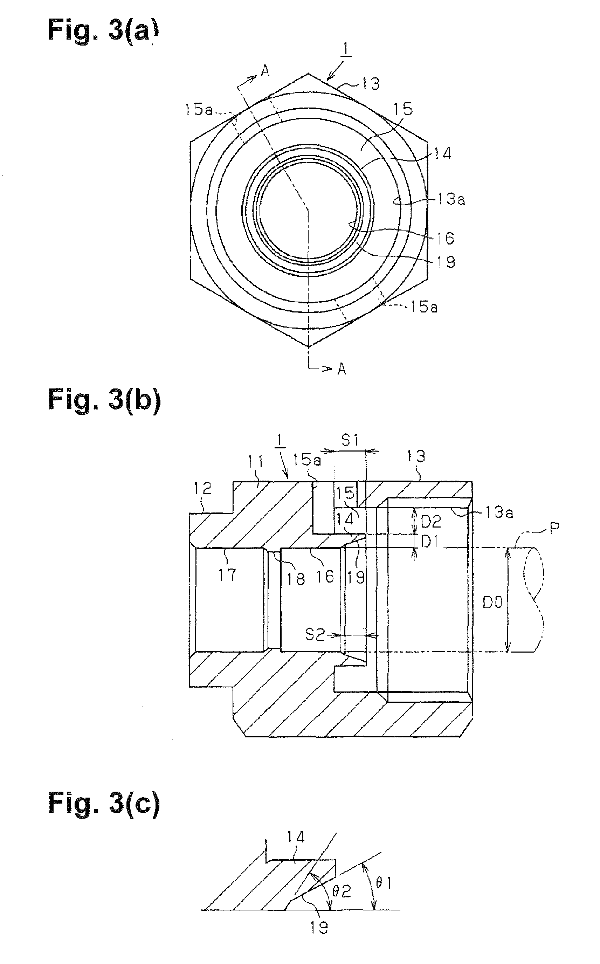

The joint main body 1 shown in Figs. 1 and 3 (a) to 3(c) is made of brass. The joint main body 1 includes a hollow base portion 11, an internal thread cylinder 13, and a hollow projection 14. The internal thread cylinder 13 extends from one end of the base portion 11. An internal thread 13a is formed on the inner surface of the internal thread cylinder 13. The projection 14 extends from the end of the base portion 11 from which the internal thread cylinder 13 also extends, and is located inside of the internal thread cylinder 13. A socket portion 12 is located on an opposite end of the base portion 11 to the end at which the internal thread cylinder 13 and the projection 14 are located. Vent holes 15a are formed in the joint main body 1. The vent holes 15a extend from the outer surface of the joint main body 1 and communicate with a gap 15 between the internal thread cylinder 13 and the projection 14. The vent holes 15a are provided for preventing the interior from being frozen.

The base portion 11 and the internal thread cylinder 13 are integrally formed to have a hexagonal nut-like shape. The space inside of a part of the base portion 11 close to the end at which the internal thread cylinder 13 and the projection 14 are located and the space inside of the projection 14 integrally form a first pipe receiving hole 16 for allowing insertion of the first pipe P. The space inside of a part of the base portion 11 close to the end at which the socket portion 12 is located forms a second pipe receiving hole 17 for allowing insertion of the second pipe Pa. A stepped portion 18 is located between the first pipe receiving hole 16 and the second pipe receiving hole 17. The stepped portion 18 allows the pipe receiving holes 16, 17 to communicate with each other. When inserted into the first pipe receiving hole 16, the first pipe P is prevented from proceeding beyond the stepped portion 18 by contacting the stepped portion 18 at the distal end. Likewise, when inserted into the second pipe receiving hole 17, the second pipe Pa is prevented from proceeding beyond the stepped portion 18 by contacting the stepped portion 18 at the distal end. The position of the distal end of the first pipe P in the first pipe receiving hole 16 is maintained as long as it contacts the stepped portion 18. Likewise, the position of the distal end of the second pipe Pa in the second pipe receiving hole 17 is maintained as long as it contacts the stepped portion 18. The side of the stepped portion 18 facing the second pipe receiving hole 17 is inclined relative to the central axis of the joint main body 1. This is attributed to the shape of the cutter used for machining the joint main body 1.

A cam surface 19 is formed at the distal end of the projection 14, or about the entrance of the pipe receiving hole 16. The cam surface 19 is formed to be conical with a diameter increasing toward the distal end of the projection 14. A part of the cam surface 19 that is located close to the proximal end of the projection 14 is inclined by an angle $\theta 2$ relative to the central axis of the joint main body 1. The remaining part, which is the most part of the cam surface 19, is inclined by an angle $\theta 1$ relative to the central axis of the joint main body 1. The angle $\theta 2$ is grater than the angle $\theta 1$ (see Fig. 3(c)).

Reference numerals S1, S2, D1, D2, and D0 shown in Fig. 3(b) are defined as follows:

S1 indicates the dimension of the gap 15 along the central axis of the joint main body 1;
S2 indicates the dimension between the ends of the cam surface 19 along the central axis of the joint main body 1;
D1 indicates the maximum thickness of the projection 14;
D2 indicates the dimension of the gap 15 along the direction perpendicular to the central axis of the joint main body 1; and
D0 indicates the outer diameter of the first pipe P.

The joint main body 1 is formed to satisfy the expressions (1) and (2) among the following four expressions, and preferably satisfy all the four expressions.

$$S1/S2 \geq 0.5 \ldots (1)$$

$$S1/D1 \geq 0.5 \ ...(2)$$

$$S1/D2 \leq 2.0 \ ...(3)$$

$$0.1 < D1/D0 < 0.4 \ ...(4)$$

The coupling member 2 shown in Figs. 1, 2 and 4(a) to 4(c) is made of brass. The coupling member 2 has a through hole 21 having a sufficient size for receiving the first pipe P. A slit 22, which has a depth perpendicular to the central axis of the coupling member 2 and extends from the outer surface of the coupling member 2, is formed along the entire circumference of the coupling member 2. The slit 22 divides the coupling member 2 into two sections along the direction of the central axis of the coupling member 2. Accordingly, the coupling member 2 has two portions arranged along the central axis with the slit 22 in between. One of the two portions is an external thread cylinder 23, and the other portion is a gripping portion 24. The external thread cylinder 23 and the gripping portion 24 are coupled to each other by a thin annular coupling portion 26. An external thread 23a is formed on the outer surface of the external thread cylinder 23. The external thread 23a can be threaded to the internal thread 13a of the internal thread cylinder 13. The outer shape of the gripping portion 24 is formed like a hexagonal nut so that it is grippable with a common fastening tool.

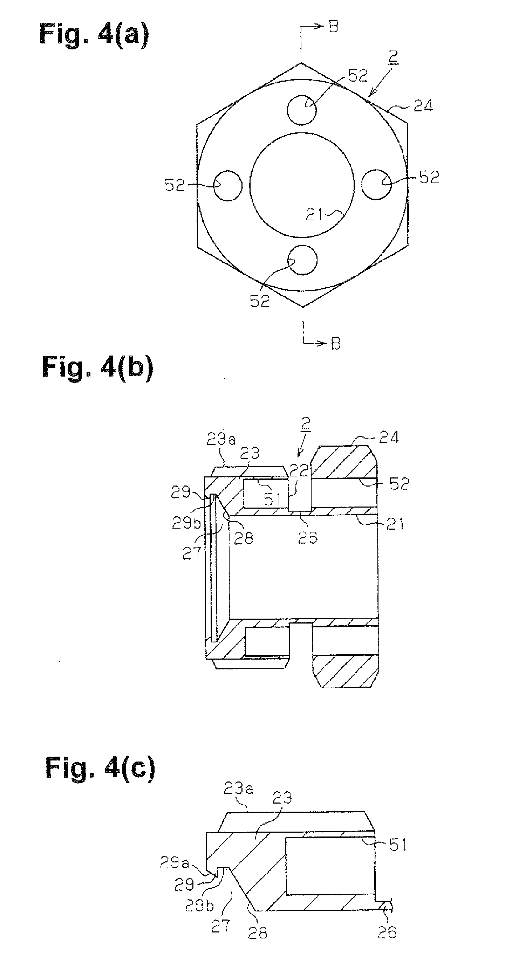

A structure for temporarily fixing the ferrule 3 to the coupling member 2 is formed at the distal portion of the external thread cylinder 23. More specifically, an annular recess 27 is formed on the inner surface of the distal portion of the external thread cylinder 23. Among the surfaces defining the recess 27, the surface facing the distal end of the external thread cylinder 23 is a pressing surface 28 for pressing the ferrule 3. The pressing surface 28 is inclined relative to the central axis of the coupling member 2, and its diameter decreases as the distance from the distal end of the external thread cylinder 23 increases. Among the surfaces defining the recess 27, a part located at the distal end of the external thread cylinder 23 has an annular protrusion 29 that protrudes inward along the radial direction of the coupling member 2. The protrusion 29 has an inclined surface 29a the diameter of which increases toward the distal end of the external thread cylinder 23 (see Fig. 4(c)). A gap 29b of a constant width exists between the protrusion 29 and the pressing surface 28.

Four engaging holes 51, with which a specialized tool discussed below engages, are formed in the proximal surface of the external thread cylinder 23. Each engaging hole 51 has a circular cross section and a predetermined depth. Through holes 52 are formed in the gripping portion 24 at positions facing the engaging holes 51. Each engaging hole 51 is easily formed using the corresponding through hole 52 of the gripping portion 24. As shown in Fig. 4(a), the four through holes 52 are arranged at equal angular intervals.

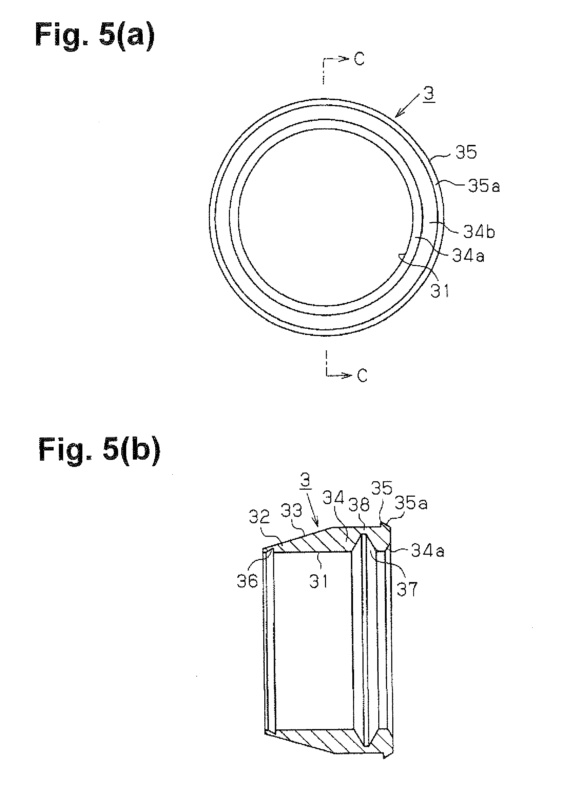

The ferrule 3 shown in Figs. 1, 2, 5(a), and 5(b) is made of brass. The ferrule 3 is formed independently from the joint main body 1 and the coupling member 2. The ferrule 3 has a through hole 31 having a sufficient size for receiving the first pipe P. A distal portion 32 of the ferrule 3, which includes the distal end of the ferrule 3 (the left end as viewed in Fig. 5(b)) has an outer surface forming a tapered surface 33. The tapered surface 33 has a diameter that decreases toward the distal end of the ferrule 3. The angle of the tapered surface 33 relative to the central axis of the ferrule 3 is smaller than the angle $\theta 1$ of the most part of the cam surface 19 relative to the central axis of the joint main body 1. A proximal portion 34 of the ferrule 3, which includes the proximal end of the ferrule 3 (the right end as viewed in Fig. 5(b)) has an outer surface that is substantially parallel with the central axis of the ferrule 3.

An annular protrusion 35 protruding outward along the radial direction of the ferrule 3 is formed at the proximal end of the ferrule 3. The protrusion 35 has an inclined surface 35a the diameter of which increases as the distance from the proximal end of the ferrule 3 increases (see Fig. 5(b)). The maximum outer diameter of the protrusion 35 is slightly greater than the minimum inner diameter of the protrusion 29 of the coupling member 2. The dimension of the protrusion 35 along the central axis of the ferrule 3 is slightly smaller than the dimension of the gap 29b between the protrusion 29 of the coupling member 2 and the pressing surface 28 along the central axis of the coupling member 2.

An inclined surface 34a is formed on the inner surface of the proximal end of the ferrule 3. The diameter of the inclined surface 34a decreases as the distance from the proximal end of the ferrule 3 increases. The ferrule 3 has a proximal edge defined by the inclined surface 34a and the inner surface of the ferrule 3.

A first notch 36 and a second notch 37 are formed on the inner surface of the ferrule 3. The first notch 36 is located in the vicinity of the distal end of the ferrule 3 and facilitates deformation of the distal portion of the ferrule 3. The first notch 36 has a cross section shaped as a right triangle. The ferrule 3 has a distal edge defined by the inner surface of the ferrule 3 and one of the surfaces defining the first notch 36 that faces the distal end of the ferrule 3.

The second notch 37 is located in the vicinity of the proximal end of the ferrule 3. The second notch 37 has a cross section that is substantially shaped like a right triangle, and more specifically, a regular trapezoid having a significantly short upper base. Because of the second notch 37, the proximal portion of the ferrule 3 has a thin portion 38, which is thinner than the remainder of the proximal portion. The second notch 37 allows the ferrule 3 to be deformed at the thin portion 38.

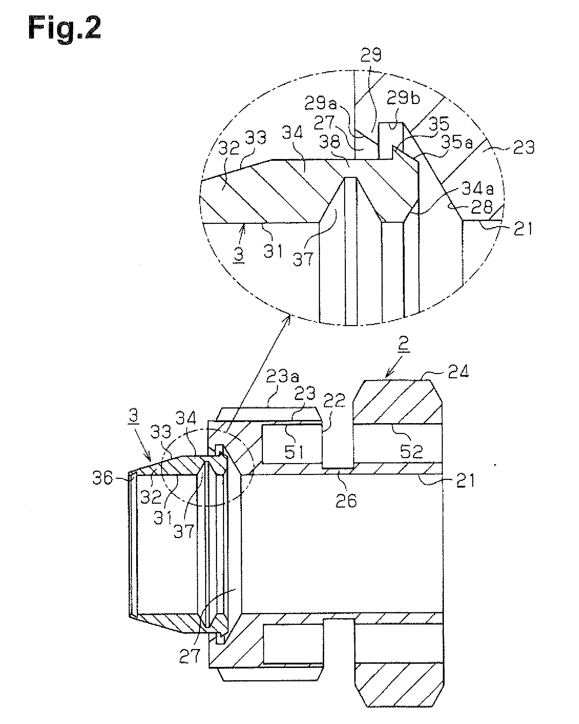

When transported or stored, the ferrule 3 is temporarily fixed to and unitized with the coupling member 2 as shown in Fig. 2. The ferrule 3 is temporarily fixed to the coupling member 2 by pushing the proximal portion of the ferrule 3 into the recess 27 of the coupling member 2 while aligning the central axis of the ferrule 3 with the central axis of the coupling member 2. When the proximal portion of the ferrule 3 is pushed into the recess 27, the inclined surface 35a of the protrusion 35 of the ferrule 3 and the inclined surface 29a of the protrusion 29 of the coupling member 2 contact each other, so that the proximal portion of the ferrule 3 is deformed to slightly reduce the diameter of the protrusion 35. This allows the proximal portion of the ferrule 3 to be pressed into the recess 27. After the proximal portion of the ferrule 3 is pressed into the recess 27, the proximal end of the ferrule 3 restores its original shape. As a result, the outer diameter of the protrusion 35 of the ferrule 3 becomes slightly larger than the inner diameter of the protrusion 29 of the coupling member 2, so that the ferrule 3 is temporarily fixed to the coupling member 2. However, since the protrusion 35 of the ferrule 3 is caught in the protrusion 29 of the coupling member 2 by a small amount, the ferrule 3 can be removed from the coupling member 2 when strongly pulled. That is, the ferrule 3 can be selectively attached to and detached from the coupling member 2.

Next, a method for connecting the first pipe P to the second pipe Pa using the above described joint main body 1, the coupling member 2, and the ferrule 3 will be described.

First, the second pipe Pa is inserted into the second pipe receiving hole 17 of the joint main body 1 until the distal end of the second pipe Pa contacts the stepped portion 18. Thereafter, brazing filler material is poured into the gap between the second pipe receiving hole 17 and the second pipe Pa, while heating the socket portion 12. The second pipe Pa is thus brazed to the joint main body 1.

Subsequently, the first pipe P is inserted into the through hole 21 of the coupling member 2 and the through hole 31 of the ferrule 3, which is temporarily fixed to the coupling member 2, so that the coupling member 2 and the ferrule 3 are provided about the first pipe P. At this time, the coupling member 2, to which the ferrule 3 is temporarily fixed, may be separated from the joint main body 1 or loosely fastened to the joint main body 1. Next, the distal end of the first pipe P, about which the coupling member 2 and the ferrule 3 are provided, is inserted into the first pipe receiving hole 16 of the joint main body 1 until it contacts the stepped portion 18. Thereafter, the coupling member 2 is inserted partway into the joint main body 1 as shown in Fig. 1.

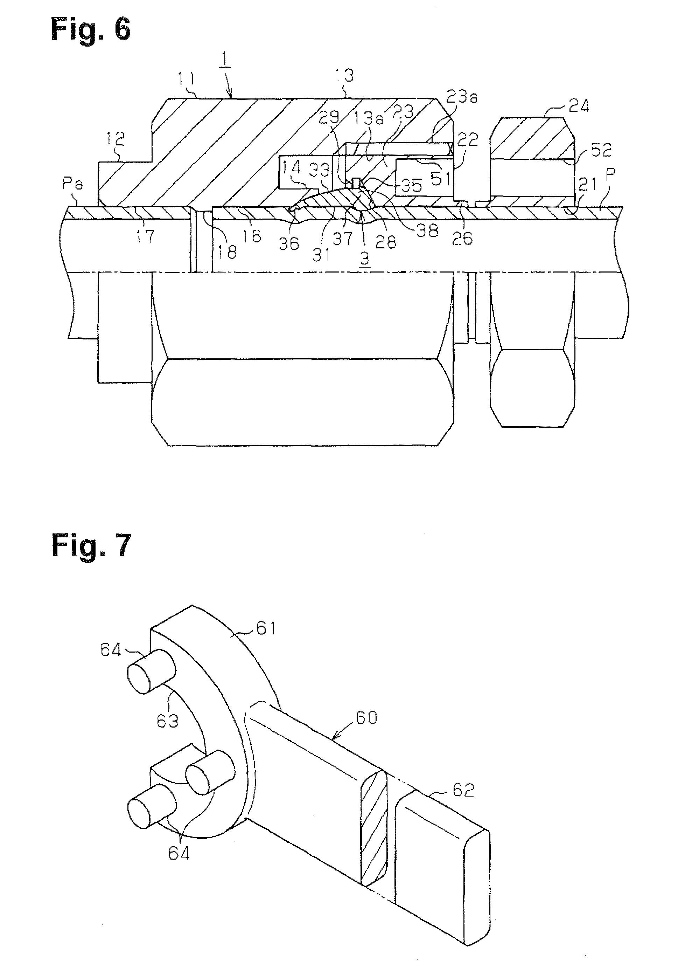

From this state, the coupling member 2 is manually fastened to the joint main body 1, so that, eventually, the ferrule 3 receives pressing force from the pressing surface 28 of the coupling member 2. By being guided by the cam surface 19, the distal end of the ferrule 3 is pushed into the space between the first pipe P and the projection 14 of the joint main body 1, that is, into the space between the surface that defines the first pipe receiving hole 16 and the outer surface of the first pipe P. As a result, the first pipe P is temporarily fixed. When the gripping portion 24 of the coupling member 2 is gripped with a fastening tool and the coupling member 2 is further fastened to the joint main body 1, the ferrule 3 is deformed at the thin portion 38 by the force applied by the pressing surface 28. This causes the distal edge and the proximal edge of the ferrule 3 to bite into the first pipe P, and the tapered surface 33 of the ferrule 3 to be pressed against the cam surface 19 (see Fig. 6).

When the biting of the proximal and distal ends of the ferrule 3 into the first pipe P has progressed to a certain level, and the torque required for fastening the coupling member 2 exceeds a predetermined value, the coupling portion 26 coupling the external thread cylinder 23 of the coupling member 2 and the gripping portion 24 is broken by the force acting on the coupling portion 26. As a result, the gripping portion 24 is separated from the external thread cylinder 23. The fastening of the coupling member 2 to the joint main body 1 is thus completed. At this time, the position of the proximal end of the external thread cylinder 23 of the coupling member 2 substantially matches with the distal end of the internal thread cylinder 13 of the joint main body 1.

After the fastening is completed, the gripping portion 24 is separated from the external thread cylinder 23. Thus, it is impossible to unscrew the external thread cylinder 23 and the joint main body 1 by manipulating the external thread cylinder 23 with a common fastening tool. However, by using the specialized tool shown in Fig. 7, the external thread cylinder 23 and the joint main body 1 can be unscrewed.

The specialized tool 60 shown in Fig. 7 is formed by a semi-annular base portion 61 and a handle 62 attached to the base portion 61. The diameter of a semicircular recess 63 of the base portion 61 is slightly larger than the outer diameter of the first pipe P. Three columnar engaging projections 64 are formed on a side of the base portion 61. The engaging projections 64 are engaged with any three of the engaging holes 51 of the external thread cylinder 23.

To unscrew the threading of the external thread cylinder 23 and the joint main body 1 after the external thread cylinder 23 and the gripping portion 24 are separated from each other, the engaging projections 64 of the specialized tool 60 are engaged with any three of the engaging holes 51 of the external thread cylinder 23, from which the gripping portion 24 has been separated. Then, the handle 62 is rotated about the base portion 61, so as to rotate the external thread cylinder 23. This unscrews the external thread cylinder 23 and the joint main body 1 and allows the first pipe P to be removed from the joint main body 1. According to this method, the first pipe P is easily removed from the joint main body 1 without cutting the pipe P. Also, with the joint main body 1 attached to the second pipe Pa, the first pipe P can be removed, and the ferrule 3 can be pulled out. In this case, the pipe P can be connected to the second pipe Pa using another set of a ferrule 3 and a coupling member 2.

The present embodiment provides the following advantages.

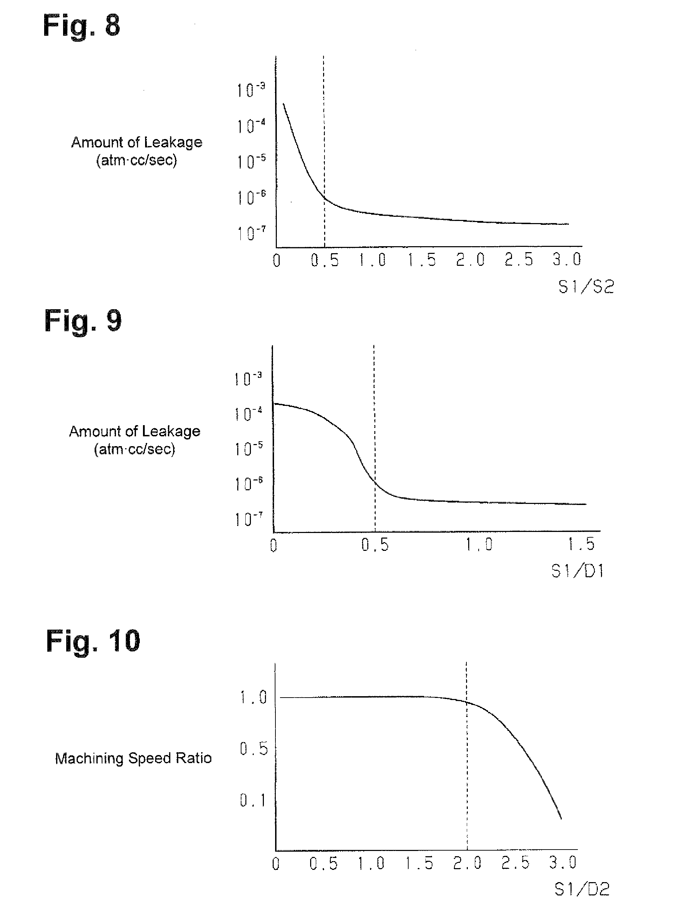

(1) The joint main body 1 is configured to satisfy the above presented expressions 1 and 2. Figs. 8 and 9 show data on the basis of which the joint main body 1 needs to satisfy the expressions 1 and 2. By designing the joint main body 1 to satisfy the expressions 1 and 2, it is possible to reduce the amount of leakage of fluid flowing through the pipes P and Pa when the first pipe P is connected to the second pipe Pa using the joint main body 1, the coupling member 2, and the ferrule 3. In other words, the first pipe P can be connected to the second pipe Pa with a high fluid-tightness. The reason for this is considered to be that the cam surface 19 of the joint main body 1 reliably conforms to the tapered surface 33 of the ferrule 3 when the tapered surface 33 is pressed against the cam surface 19.

(2) The joint main body 1 is preferably configured to satisfy the expression 3, in addition to the expressions 1 and 2. Fig. 10 shows data on the basis of which the joint main body 1 is preferably configured to satisfy the expression 3. If the joint main body 1 is configured to satisfy the expression 3, the machining of the gap 15 between the internal thread cylinder 13 and the projection 14 of the joint main body 1 is facilitated, and the time required for the machining is reduced.

(3) The joint main body 1 is preferably configured to satisfy the expression 4, in addition to the expressions 1 and 2. If the joint main body 1 is configured to satisfy the expression 4, the bite-type pipe connection structure according to the present embodiment is particularly suitable for, for example, refrigeration apparatuses.

(4) The gap 15 defined between the internal thread cylinder 13 and the projection 14 of the joint main body 1 prevents heat applied to the socket portion 12 to braze the second pipe Pa to the joint main body 1, from being conducted to the cam surface 19 of the projection 14. This prevents thermal deformation of the cam surface 19 and formation of oxide film on the cam surface 19.

(5) If the first pipe P is made of copper, and the joint main body 1, the coupling member 2, and the ferrule 3 are made of brass, a bite-type pipe connection structure particularly suitable for refrigeration apparatuses is provided.

(6) The coupling member 2 shown in Figs. 1, 2, and 4(a) to 4(c) is suitable for providing a bite-type pipe connection structure with a ferrule 3 that is formed independently from the joint main body 1 and the coupling member 2.

(7) Since the ferrule 3 is formed independently from the joint main body 1 and the coupling member 2, the ferrule 3 is machined in a shorter time than a ferrule integrally formed with a coupling member.

(8) While being formed independently from the joint main body 1 and the coupling member 2, the ferrule 3 is temporarily fixed to and unitized with the coupling member 2 from the stage of transportation and storage. Therefore, unlike a conventional separate and independent type ferrule, the ferrule 3 does not increase the number of steps of parts control and is not easily lost.

(9) A valve and a pipe joint in which the bite-type pipe connection structure of the present embodiment is used provide the advantages of bite-type pipe connection structures, such as fluid-tightness and shortened machining time. Also, refrigeration apparatuses in which such a valve or pipe joint is used in the refrigerant circuit provide the same advantages.

Modifications

The above described embodiment may be modified as follows.

The ferrule 3 may be used without being temporarily fixed to or unitized with the coupling member 2.

In place of the ferrule 3, a ferrule that is formed integrally with the coupling member 2 may be used.

The structure for temporarily fixing the coupling member 2 to the ferrule 3 is not limited to that in the above described embodiment. Any structure can be employed as long as the temporarily fixed ferrule 3 is rotatable relative to the coupling member 2 and movable in a predetermined range along the axial direction of the ferrule 3, the coupling member 2 and the ferrule 3 can be transported when temporarily fixed to and unitized with each other, and the coupling member 2, to which the ferrule 3 is temporarily fixed, can be assembled with the joint main body 1.

An enclosing wall for protecting the ferrule 3 temporarily fixed to the coupling member 2 may be detachably attached to the coupling member 2.

The joint main body 1 does not necessarily need to be attached to the pipe Pa. The joint main body 1 may be attached to a connection object such as an apparatus and a container by inserting the socket portion 12 in a connection port of the connection object and brazing the socket portion 12 to the connection port. Alternatively, an external thread may be formed on the outer surface of the socket portion 12. In this case, the joint main body 1 is attached to a connection object by threading the sock-

et portion 12 to a connection port of the connection object.

The joint main body 1, the coupling member 2, and the ferrule 3 do not necessarily made of brass, but may be other material such as iron-based metal depending on the intended use.

The vent holes 15a, which are formed in the joint main body 1 to prevent the interior from being frozen, may be omitted.

The coupling member 2 may be configured such that the gripping portion 24 cannot be separated from the external thread cylinder 23.

The bite-type pipe connection structure of the present invention may be applied to a refrigerant circuit, water circuit, and gas circuit in a refrigeration apparatus, air conditioner, water heating device such as a water heater, water supply device, and production facility. The bite-type pipe connection structure of the present invention may be applied to connection between pipes, pipe joint portions in valves such as stop valves, and a pipe joint portion in various devices. The bite-type pipe connection structure of the present invention may be applied to metal pipes such as copper pipes and stainless steel pipes, and resin pipes.

**Claims**

1. A bite-type pipe connection structure for connecting a pipe to a connection object, comprising:

   a joint main body attached to the connection object, a coupling member fastened to the joint main body, and a ferrule arranged between the joint main body and the coupling member, wherein the joint main body includes a base portion, an internal thread cylinder that has an internal thread formed on the inner surface and extends from the base portion, and a hollow projection that projects from the base portion and is located inside of the internal thread cylinder, a space inside the projection forming a pipe receiving hole that allows for insertion of the pipe, a cam surface being formed at the distal portion of the projection, the cam surface being able to contact a tapered surface of the ferrule, and a gap being defined between the internal thread cylinder and the projection,
   the bite-type pipe connection structure being **characterized in that** the joint main body is configured to satisfy the following expressions 1 and 2:

   $$S1/S2 \geq 0.5 \ldots (1)$$

   $$S1/D1 \geq 0.5 \ldots (2)$$

   (where S1 indicates the dimension of the gap along the central axis of the joint main body, S2 indicates the dimension between the ends of the cam surface along the central axis of the joint main body, and D1 indicates the maximum thickness of the projection).

2. The bite-type pipe connection structure according to claim 1, wherein the joint main body is configured to further satisfy the following expression 3:

   $$S1/D2 \leq 2.0 \ldots (3)$$

   (where D2 indicates the dimension of the gap along the direction perpendicular to the central axis of the joint main body).

3. The bite-type pipe connection structure according to claim 1 or 2, wherein the joint main body is configured to further satisfy the following expression 4:

   $$0.1 < D1/D0 < 0.4 \ldots (4)$$

   (where D0 indicates the outer diameter of the pipe).

4. The bite-type pipe connection structure according to any one of claims 1 to 3, wherein a socket portion is provided in a part of the base portion opposite to the part of the base portion at which the internal thread cylinder is provided, and the joint main body being attached to the connection object by brazing the socket portion to the connection object.

5. The bite-type pipe connection structure according to any one of claims 1 to 4, wherein the pipe is made of copper, and the joint main body, the coupling member, and the ferrule are made of brass.

6. The bite-type pipe connection structure according to any one of claims 1 to 5, wherein the coupling member includes a through hole having a size sufficient for receiving the pipe, a pressing surface that is arranged to face the ferrule so as to press the ferrule, and an external thread cylinder having an external thread formed on the outer side, and wherein the external thread can be threaded to the internal thread.

7. A valve comprising a pipe joint portion in which the bite-type pipe connection structure according to any one of claims 1 to 6 is used.

8. A bite-type pipe joint comprising a pipe joint portion in which the bite-type pipe connection structure according to any one of claims 1 to 6 is used.

**9.** A refrigeration apparatus comprising a refrigerant circuit including the valve according to claim 7.

**10.** A refrigeration apparatus comprising a refrigerant circuit including the bite-type pipe joint according to claim 8.

# Fig.1

# Fig.2

# Fig. 3(a)

# Fig. 3(b)

# Fig. 3(c)

# Fig. 4(a)

# Fig. 4(b)

# Fig. 4(c)

# Fig. 5(a)

# Fig. 5(b)

# Fig. 6

# Fig. 7

# Fig. 8

Amount of Leakage
(atm·cc/sec)

# Fig. 9

Amount of Leakage
(atm·cc/sec)

# Fig. 10

Machining Speed Ratio

# Fig. 11

# Fig. 12

<div align="center">

**INTERNATIONAL SEARCH REPORT**

</div>

| International application No. |
| --- |
| PCT/JP2009/063863 |

**A. CLASSIFICATION OF SUBJECT MATTER**
*F16L19/08*(2006.01)i

According to International Patent Classification (IPC) or to both national classification and IPC

**B. FIELDS SEARCHED**

Minimum documentation searched (classification system followed by classification symbols)
F16L19/08

Documentation searched other than minimum documentation to the extent that such documents are included in the fields searched

| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2008-69811 A (Daikin Industries, Ltd.), 27 March 2008 (27.03.2008), entire text; all drawings & EP 2063164 A & WO 2008/032564 A1 & KR 10-2009-32135 A & CN 101501384 A | 1-10 |
| Y | JP 11-30368 A (Chiyoda Air-Con Parts Co., Ltd.), 02 February 1999 (02.02.1999), entire text; all drawings (Family: none) | 1-10 |
| Y | JP 2002-22074 A (Zexel Valeo Climate Control Corp.), 23 January 2002 (23.01.2002), entire text; all drawings (Family: none) | 4 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 October, 2009 (29.10.09) | 10 November, 2009 (10.11.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

# EP 2 312 189 A1

**INTERNATIONAL SEARCH REPORT**

| International application No. |
| --- |
| PCT/JP2009/063863 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2001-355942 A  (Daikin Industries, Ltd.), 26 December 2001 (26.12.2001), entire text; all drawings (Family: none) | 5 |

Form PCT/ISA/210 (continuation of second sheet) (April 2007)

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008106935 A